# EUROPÄISCHE PATENTSCHRIFT

(11) **EP 3 793 792 B1**
(45) Veröffentlichungstag und Bekanntmachung des Hinweises auf die Patenterteilung: **20.12.2023**
(21) Anmeldenummer: 19722925.5
(22) Anmeldetag: 14.05.2019
(51) Int. Cl.: B29B 7/84, B29B 7/48, B29B 7/74, C08L 51/04, C08F 285/00, B29B 7/60, B29B 9/06, B29C 48/00, B29C 48/04, B29C 48/05, B29C 48/28, B29C 48/38, B29C 48/76

(54) **VERFAHREN UND VORRICHTUNG ZUR HERSTELLUNG EINER THERMOPLASTISCHEN FORMMASSE, UND DANACH HERGESTELLTE FORMMASSE**
METHOD AND DEVICE FOR PRODUCING A THERMOPLASTIC MOLDING COMPOUND, AND MOLDING COMPOUND PRODUCED THEREFORM
PROCÉDÉ ET DISPOSITIF POUR LA FABRICATION D'UNE MATIÈRE À MOULER THERMOPLASTIQUE, ET MATIÈRE À MOULER AINSI PRODUITE

(30) Priorität: 18.05.2018 EP 18173190
(43) Veröffentlichungstag der Anmeldung: 24.03.2021
(73) Patentinhaber: INEOS Styrolution Group GmbH, 60325 Frankfurt (DE)
(72) Erfinder: FISCHER, Wolfgang, 69124 Heidelberg (DE); ITTEMANN, Peter, 67125 Dannstadt-Schauernheim (DE); BONGARDT, Tim, 01139 Dresden (DE); SCHIPPAN, Sven, 01987 Schwarzheide (DE)
(74) Vertreter: Jacobi, Markus Alexander
(86) Internationale Anmeldenummer: PCT/EP2019/062331
(87) Internationale Veröffentlichungsnummer: WO 2019/219673

(56) Entgegenhaltungen:
- EP-A1- 0 735 078
- EP-A1- 1 400 337
- WO-A1-98/13412
- DE-A1- 19 547 976
- DE-A1-102008 009 735

## Beschreibung

Die vorliegende Erfindung betrifft ein Verfahren zur Herstellung einer thermoplastischen Formmasse (F) in einem Extruder.

Bei dem Verfahren zur Herstellung der thermoplastischen Formmasse (F) in einem Extruder, der mindestens eine Schnecke mit einem Außendurchmesser (D) aufweist, wird eine thermoplastische Komponente (TP), enthaltend mindestens ein thermoplastisches Polymer, eine Komponente (C), enthaltend ein Pfropfpolymer, das insbesondere auf Butadien und/oder Acrylat basiert, und gegebenenfalls eine Komponente (Z), enthaltend Zusatzstoffe, durch Zuführung von thermischer Energie und/oder mechanischer Energie in einem Aufschmelzabschnitt (S) des Extruders und/oder in mindestens einem Mischabschnitt (M) des Extruders auf eine Temperatur von 200°C bis 280°C erwärmt, aufgeschmolzen und gemischt, so dass eine thermoplastische Formmasse (F) gebildet wird, und diese thermoplastische Formmasse (F) nachfolgend in einer Entgasungszone (E) des Extruders, die mindestens eine Entgasungsöffnung (O) aufweist, entgast wird.

Weiterhin betrifft die Erfindung eine thermoplastische Formmasse hergestellt nach dem erfindungsgemäßen Verfahren sowie eine Vorrichtung zur Durchführung des erfindungsgemäßen Verfahrens.

Die Herstellung, Entgasung und ggf. Entwässerung von thermoplastischen Formmassen mittels Schneckenmaschinen ist allgemein bekannt. Polymere und Polymer-Blends enthalten häufig zu entgasende Restmonomere und/oder Restlösemittel, welche u.a. durch die Rohstoffe eingetragen wurden. In temperatursensiblen Polymeren oder Polymer-Blends können sich während des Extrusionsverfahrens auch Monomere durch thermisch induzierte Polymerrückspaltung bilden. Der thermische Abbau kann Kettenspaltung und/oder Depolymerisation umfassen. Auch die Polymere Polymethylmethacrylat (PMMA) und Polystyrol (PS) neigen zur Depolymerisation unter thermischer Belastung, wobei der mittlere Polymerisationsgrad und die Molekularmasse des Polymers durch Monomer-Abspaltungen vom Kettenende her abnehmen.

Bei kautschukmodifizierten Polymer-Blends, die einen auf Polybutadien basierenden Schlagzähmodifikator (Kautschuk) enthalten, wie z.B. ABS oder MABS, kann beispielsweise das enthaltene Polybutadien zu 1,3-Butadien rückgespalten werden. Die Rückspaltungskinetik ist im Allgemeinen temperaturabhängig, mit steigender Temperatur nimmt die Rückspaltung häufig überproportional zu.

Der Monomeren-Gehalt im Endprodukt hängt von der monomeren Konzentration in den eingesetzten Ausgangsrohstoffen und der Entgasungseffizienz während der Extrusion ab, aber auch vom Temperaturprofil während des Extrusionsverfahrens. Die Temperatur während des Extrusionsverfahrens kann jedoch nicht beliebig abgesenkt werden, da Probleme beim Aufschmelzen und Durchmischen der verschiedenen Komponenten auftreten können, die die Produktqualität und insbesondere die mechanischen Eigenschaften von Formteilen oder anderen Produkten beeinträchtigen. Insbesondere für Anwendungen in Verbindung mit Lebensmitteln wird ein geringer Gehalt an Restmonomeren im Produkt verlangt. Hier besteht ein Verbesserungsbedarf.

WO 2010/094416 beschreibt ein Compoundierungsverfahren zur Herstellung schlagzähmodifizierter thermoplastischer Zusammensetzungen mit einem niedrigen Gehalt an flüchtigen organischen Verbindungen (VOC). Eine Mischung mit einem Wassergehalt von 2 bis 40 Gew.-% wird in einem Compoundierungsaggregat gemischt und aufgeschmolzen. Das Compoundierungsaggregat umfasst eine Aufschmelzzone, eine Mischzone und eine Entgasungszone. Die entgaste Polymerschmelze wird über eine Düse aus dem Compoundierungsaggregat geführt und als Schmelzestrang zur Abkühlung einem Wasserbad zugeführt und granuliert. Die Schmelze tritt mit einer Temperatur von 280°C oder mehr aus der Extruderdüse aus.

WO 2017/093468 beschreibt die Herstellung von ABS-Formmassen, wobei das Verfahren die Schritte Fällung des Pfropfcopolymers, mechanisches Entwässern, Trocknen des Pfropfcopolymers und Vermischen mit einem thermoplastischen Copolymer, wie SAN, beinhaltet. Auf die in WO 2017/093468 beschriebenen Zusammensetzungen lässt sich das erfindungsgemäße Verfahren besonders gut anwenden.

WO 98/13412 offenbart ein Verfahren zur Herstellung von schlagzäh modifizierten Thermoplasten oder schlagzäh modifizierte Thermoplaste enthaltende Polymerblends, wobei die Thermoplasten bzw. die Polymerblends
A) 5 bis 95 Gew.-% mindestens einer wasserfeuchten, bis zu 60 Gew.-% Restwasser enthaltenden Elastomerkomponente A,
B) 5 bis 95 Gew.-% mindestens eines thermoplastischen Polymeren B,
C) 0 bis 95 Gew. % mindestens eines weiteren Polymeren C, und
D) 0 bis 70 Gew.-% Zusatzstoffe D enthalten,
durch Vermischen der Elastomerkomponente A mit dem thermoplastischen Polymeren B sowie, sofern vorhanden, dem weiteren Polymeren C und, sofern vorhanden, den Zusatzstoffen D in einer Schneckenmaschine unter mechanischer Entwässerung der Elastomerkomponente A, wobei man die Komponenten A, B, C und D einem Extruder mit mindestens zwei gleichsinnig oder gegensinnig rotierenden Schnecken mit einem Schneckendurchmesser D_{Schnecke} zuführt, wobei der Extruder in Förderrichtung (stromabwärts) im Wesentlichen aus
- mindestens einem Dosierabschnitt, in den mittels einer Dosiereinrichtung die Elastomerkomponente A dem Extruder zugeführt wird,
- mindestens einem der Entwässerung der Elastomer Komponente A dienenden Abquetschabschnitt, der mindestens ein Stauelement, sowie jeweils mindestens eine zugehörige Entwässerungsöffnung, die sich in einem Abstand von mindestens einem Schneckendurchmesser D_{Schnecke} vor dem (ersten) Stauelement stromaufwärts befindet, enthält,
- mindestens einem Zufuhrabschnitt, in dem das thermoplastische Polymere B als Schmelze in den Extruder eingeführt wird,
- mindestens einem mit Durchmischungs- und/oder Knetelementen versehenen Plastifizierungsabschnitt,
- mindestens einem mit mindestens einer Entgasungsöffnung versehenen Entgasungsabschnitt, in dem das restliche Wasser als Dampf entfernt wird, und
- einer Austragszone aufgebaut ist,
und wobei das aus den Entwässerungsöffnungen austretende Wasser teilweise oder vollständig in flüssiger Phase vorliegt, und dass die Komponenten C und/oder D gemeinsam oder getrennt voneinander entweder mit der Komponente A und/oder B zusammen oder getrennt von A und B einem oder mehreren der genannten Extruderabschnitte zugeführt werden.

EP 0 735 078 offenbart ein Verfahren zur Herstellung von schlagzäh modifizierten Thermoplasten durch mechanische Entwässerung einer wasserfeuchten, bis zu 50 Gew.-% Restwasser enthaltenden Elastomerkomponente A und Vermischen der so erhaltenen entwässerten Elastomerkomponente A' mit einem thermoplastischen Polymeren B in einer Schneckenmaschine, dadurch gekennzeichnet, dass man die Elastomerkomponente A einem Zweischneckenextruder mit gleichsinnig rotierenden Schnecken zuführt, der in Förderrichtung im Wesentlichen aus
- einem Dosierabschnitt, in den mittels einer Dosiereinrichtung die Elastomerkomponente A dem Extruder zugeführt wird,
- mindestens einem der Entwässerung dienenden Abquetschabschnitt, der mindestens ein Stauelement, sowie jeweils mindestens eine zugehörige Entwässerungsöffnung, enthält,
- mindestens einem Abschnitt, in dem das thermoplastische Polymere B als Schmelze in den Extruder eingeführt wird,
- mindestens einem mit Durchmischungs-, Knet- und/oder anderen Plastifizierungselementen versehenen Abschnitt,
- mindestens einem mit mindestens einer Entgasungsöffnung versehenen Entgasungsabschnitt, in dem das restliche Wasser als Dampf entfernt wird, und
- einer Austragszone aufgebaut ist, und dass das aus den Entwässerungsöffnungen austretende Wasser teilweise oder vollständig in flüssiger Phase vorliegt.

ABS-Formmassen sind bevorzugt Formmassen enthaltend mindestens 25 Gew.-%, oftmals mindestens 60 Gew.-% eines thermoplastischen Copolymers (wie z.B. SAN) und ferner mindestens ein Pfropfcopolymer. Bevorzugt enthalten ABS-Formmassen ausschließlich das thermoplastische Copolymer und das Pfropfcopolymer als polymere Komponenten. Handelsübliche ABS-Produkte sind z.B. Terluran^{®} der Ineos Styrolution (Frankfurt). Die thermoplastischen Formmassen im Sinne der vorliegenden Erfindung können auch Polymer-Blends sein, enthaltend das thermoplastische Copolymer (wie SAN), ein Pfropfcopolymer (z.B. basierend auf einem Polybutadien-Kautschuk) und mindestens ein kautschukfreies thermoplastisches Harz, beispielsweise ein Polykondensat, bevorzugt ausgewählt aus Polycarbonaten, Polyestercarbonaten, Polyestern und Polyamiden.

Es ist eine Aufgabe der vorliegenden Erfindung, die Depolymerisation bei der Herstellung der thermoplastischen Formmasse und damit den Gehalt an Restmonomeren in der thermoplastischen Formmasse im Extrusionsverfahren, insbesondere nach der Entgasungszone (E), zu reduzieren.

Überraschend wurde gefunden, dass in einem Extruder längere Förderstrecken (FS) mit Förderelementen nach der Entgasungsöffnung (O) der Entgasungszone (E) zu einer deutlichen Temperaturerhöhung der Formmasse (F) führen, und zwar auch dann, wenn zur für die Granulierung notwendige Druckerhöhung eine Schmelzepumpe zum Einsatz kommt. Diese Temperaturerhöhung kann wie dargelegt zu einem unerwünscht starken Aufbau von Restmonomeren in der Formmasse (F) führen.

Die Aufgabe wird gelöst durch ein Verfahren nach dem unabhängigen Anspruch 1 zur Herstellung einer thermoplastischen Formmasse (F) in einem Extruder, der mindestens eine Schnecke mit einem Außendurchmesser (D) aufweist, wobei:
- die thermoplastische Komponente (TP), enthaltend mindestens ein thermoplastisches Polymer, wie z.B. SAN-Copolymer,
- Komponente (C), enthaltend ein Pfropfpolymer, das insbesondere auf Butadien und/oder Acrylat basiert, wie ASA- oder ABS-Copolymere, und
- gegebenenfalls Komponente (Z), enthaltend Zusatzstoffe,

durch Zuführung von thermischer Energie und/oder mechanischer Energie in einem Aufschmelzabschnitt (S) des Extruders und/oder in mindestens einem Mischabschnitt (M) des Extruders auf eine Temperatur von 200°C bis 280°C erwärmt, aufgeschmolzen und gemischt werden, so dass die thermoplastische Formmasse (F) gebildet wird, und die thermoplastische Formmasse (F) nachfolgend in einer Entgasungszone (E) des Extruders, die mindestens eine Entgasungsöffnung (O) aufweist, entgast wird, wobei in der Entgasungszone (E) des Extruders ein absoluter Druck (P1) von weniger als 2 bar, bevorzugt weniger als 1,5 bar und mehr bevorzugt weniger als 1 bar, eingestellt wird, und
die thermoplastische Formmasse (F) nach dem Entgasen mittels Schneckenelementen zu einer Schmelzepumpe (SP) gefördert wird, wobei die Gesamtlänge der Schneckenelemente einer Förderstrecke (FS) von der mindestens einen Entgasungsöffnung (O) zu der Schmelzepumpe (SP) weniger als das vierfache des Außendurchmessers (D) der Schnecke beträgt. Als Förderstrecke (FS) wird die Strecke zwischen dem stromabwärtsseitigem Ende der Entgasungsöffnung (O) und dem Ende des letzten Schneckenelementes verstanden (siehe Figuren).

Des Weiteren betrifft die Erfindung eine Vorrichtung nach dem unabhängigen Anspruch 13 zur Durchführung des erfindungsgemäßen Verfahrens, umfassend einen Extruder, der mindestens eine Schnecke mit einem Außendurchmesser (D), einen Dosierabschnitt (DA), mindestens einen Mischabschnitt (M) und mindestens eine Entgasungszone (E) aufweist, und eine Schmelzepumpe (SP) mit einer Eintrittsöffnung umfasst, wobei die Entgasungszone (E) mindestens eine Entgasungsöffnung (O) aufweist und die Entgasungszone (E) und die Schmelzepumpe (SP) so angeordnet sind, dass die Gesamtlänge der Schneckenelemente der Förderstrecke (FS) zwischen der mindestens einen Entgasungsöffnung (O) der Entgasungszone (E) und der Eintrittsöffnung der Schmelzepumpe (SP) weniger als das vierfache des Außendurchmessers (D) der Schnecke beträgt.

Die Erfindung betrifft weiterhin eine thermoplastische Formmasse (F) nach dem unabhängigen Anspruch 11 hergestellt nach dem erfindungsgemäßen Verfahren, beispielsweise eine ABS- oder ASA-Formmasse, wobei die thermoplastische Formmasse (F) nach Durchführung des Verfahrens nicht mehr als 3 ppm monomeres Butadien enthält, bezogen auf die Gesamtmasse der thermoplastischen Formmasse (F).

Das erfindungsgemäße Verfahren, das auch als Compoundierung bezeichnet werden kann, die erfindungsgemäße Vorrichtung und die erfindungsgemäße thermoplastische Formmasse (F) werden im Folgenden beschrieben.

In einem Extruder wird die Antriebsleistung in eine Temperaturerhöhung und Druckleistung umgesetzt. Üblicherweise umfasst ein Extruder folgende Verfahrenszonen:
Feststoffeinzug, Aufschmelzen (Plastifizieren), eventuell weiteren Stoffeinzug, Dispergieren, Homogenisieren, Entgasen und Austragen (siehe auch "Aufbereiten von Polyolefinen", VDI-Verlag, 1984, S.185ff). Die vorliegende Erfindung ist insbesondere auf die Verfahrenszone des Austragens der Polymermasse gerichtet.

Der Extruder ist bevorzugt, in Förderrichtung stromabwärts, im Wesentlichen aufgebaut aus:
a) mindestens einem Dosierabschnitt (DA), in den mittels einer Dosiereinrichtung die thermoplastische Komponente (TP) zumindest teilweise zugeführt wird,
b) mindestens einem Aufschmelzabschnitt (S), in dem zumindest Teile der thermoplastischen Komponente (TP) und gegebenenfalls Komponente C aufgeschmolzen werden,
c) mindestens einem Mischabschnitt (M), der Mischungs-, Knet- und/oder andere Plastifizierungs-Elemente umfasst,
d) mindestens einer Entgasungszone (E), die mindestens eine Entgasungsöffnung (O) aufweist, und
e) einer Austragszone (AZ), in der die thermoplastische Formmasse (F) aus dem Extruder ausgetragen wird.

In dem mindestens einen Dosierabschnitt (DA) wird üblicherweise Feststoff gefördert und verdichtet sowie mitgeschleppte Luft entfernt. In dem mindestens einen Aufschmelzabschnitt (S) werden üblicherweise Polymere aufgeschmolzen und Füllstoffe vordispergiert. Dem kann eine Schmelze-Förderzone, wie eine distributive Mischzone folgen, in der Feststoffe und Fluide in der Schmelze verteilt werden und die Massetemperatur homogenisiert wird. In einer dispersiven Mischzone können Feststoff-Polymerpartikel und Flüssigkeitstropfen verteilt werden. Die Entgasungszone (E) dient insbesondere der Entfernung von Wasser, Restmonomeren und Lösungsmitteln. Durch die mindestens eine Entgasungsöffnung (O) entweichen insbesondere Luft, Wasser und/oder flüchtige organische Verbindungen (VOC).

Grundsätzlich dienen eine hohe Schmelzetemperatur, hohe Drehzahl und gegebenenfalls die Zugabe von Schleppmittel (z.B. Wasser) sowie das Anlegen eines Vakuums einer Optimierung der Entgasung. Die mindestens eine Entgasungsöffnung (O) weist bevorzugt eine Venturi-Absaugung auf. Bevorzugt ist die mindestens eine Entgasungsöffnung (O) mit einer Rückhalteschnecke ausgerüstet. Rückhalteschnecken, die auch als Stopfschnecken bezeichnet werden, können das Austreten der thermoplastischen Formmasse (F) durch die mindestens eine Entgasungsöffnung (O) verhindern. Auch andere Rückhalteelemente können eingesetzt werden.

Die mindestens eine Entgasungsöffnung (O) kann unter Normaldruck, unter Vakuum oder unter Überdruck betrieben werden, wobei alle Entgasungsöffnungen (O) den gleichen oder unterschiedlichen Druck aufweisen können. Im Falle eines Vakuums beträgt der absolute Druck (P1) in der Entgasungszone (E) üblicherweise 2 mbar bis 900 mbar, bevorzugt 10 mbar bis 800 mbar, besonders bevorzugt 30 mbar bis 500 mbar. Bei einer Entgasung unter Überdruck wird in der Regel 1,1 bar bis 1,5 bar absoluter Druck eingestellt. Bevorzugt ist es jedoch, die mindestens eine Entgasungsöffnung (O) unter Normaldruck oder unter Vakuum zu betreiben.

Üblicherweise umfasst die Austragszone (AZ) eine Druckaufbauzone, um den in nachgeschalteten Aggregaten wie Filtern benötigten Druck zu erzeugen.

Ferner kann der Extruder einen weiteren Zuführabschnitt umfassen, in dem mindestens eine der Komponenten (TP), (C) und (Z) vollständig oder teilweise, bevorzugt als Schmelze, in Förderrichtung abwärts von dem Dosierabschnitt (DA) zugeführt wird. Der mindestens eine Aufschmelzabschnitt (S) und mindestens ein Mischabschnitt (M) können in einem Abschnitt des Extruders kombiniert sein.

In einer bevorzugten Ausführungsform weist die mindestens eine Schnecke einen Außendurchmesser (D) von 30 mm bis 230 mm, insbesondere von 60 mm bis 220 mm, auf. Eine bevorzugte Drehzahl der mindestens einen Schnecke beträgt von 200 bis 1.500 UpM. Der Extruder weist bevorzugt zwei, insbesondere zwei gleichsinnig rotierende Schnecken auf. Bevorzugt beträgt ein Durchsatz an thermoplastischer Formmasse (F) im Extruder 400 kg/h bis 10.000 kg/h.

Bevorzugt weist die thermoplastische Formmasse (F) während der Förderung in der förderstrecke (FS) von der mindestens einen Entgasungsöffnung (O) zu der Schmelzepumpe (SP) einen absoluten Druck (P2) von weniger 40 bar, mehr bevorzugt weniger als 30 bar und insbesondere weniger als 15 bar auf.

Ein absoluter Druck (P3) der thermoplastischen Formmasse (F) wird in der Schmelzepumpe (SP) bevorzugt auf mindestens 50 bar, mehr bevorzugt auf mindestens 65 bar und insbesondere bevorzugt auf, mindestens 70 bar erhöht.

Der absolute Druck kann jeweils durch übliche Druckmessgeräte gemessen werden. Die Prüfung kann auf direkte Messung des mechanischen Drucks beruhen oder auf Messung des Drucks auf einer Membran, ein Piezoelement, einen Sensor, oder weiteren üblichen Bauelementen, die vom Fachmann in der technischen Druckprüfung eingesetzt werden.

Die Temperatur der Formmasse (F) kann durch ein tief in die Schmelze hineinreichendes Thermoelement in einem Adapterstück (AD) gemessen werden und/oder mit einem handelsüblichen Einstechthermometer am Polymerstrang, z.B. an der Düsenleiste bzw. an der auf den Boden geschalteten Anfahrweiche der Unterwassergranulierungseinrichtung.

Im Gegensatz zu einem weiteren Extruderabschnitt, in dem Förderelemente zum Druckaufbau eingesetzt werden, weist die Schmelzepumpe (SP), die dem Druckaufbau und Austrag der thermoplastische Formmasse (F) aus dem Extruder dient, den Vorteil auf, dass die thermoplastische Formmasse (F) gefördert wird ohne zusätzlich stark erwärmt zu werden. Bevorzugt ist die Schmelzepumpe (SP) als Zahnradpumpe ausgeführt.

Während der Förderung von der mindestens einen Entgasungsöffnung (O) zu der Schmelzepumpe (SP) weist die thermoplastische Formmasse (F) bevorzugt eine Temperatur von weniger als 280°C auf. Bevorzugt beträgt die Temperatur weniger als 275°C und insbesondere weniger als 265°C.

Üblicherweise weist die thermoplastische Formmasse (F) in Förderrichtung nach dem Aufschmelzabschnitt (S) eine Temperatur von mindestens 200°C auf.

Die thermoplastische Formmasse (F) kann von der mindestens einen Entgasungsöffnung (O) zu der Schmelzepumpe (SP) über mindestens ein Schneckenelement und/ oder über ein Adapterstück gefördert werden. Das Adapterstück umfasst keine Förderelement und keine Mischelement, so die Temperatur der thermoplastischen Formmasse (F) über die Länge des Adapterstücks im Wesentlichen konstant ist. Das Adapterstück dient lediglich der Überführung der thermoplastischen Formmasse (F) von der Entgasungszone (E) in die Schmelzepumpe (SP), die üblicherweise unterschiedliche Öffnungsgeometrien aufweisen. Im Sinne der Erfindung ist das Adapterstück gegebenenfalls von der Schmelzepumpe (SP) umfasst.

Bevorzugt sind zwischen der Entgasungszone (E) und der Schmelzepumpe (SP) keine Mischelemente angeordnet. Weiterhin ist bevorzugt zwischen dem Gehäuse der Entgasungszone (E) und der Schmelzepumpe (SP) kein geschlossenes Gehäuse angeordnet. Bevorzugt werden geschlossene Gehäuse mit Förderelementen, die in Förderrichtung nach der Entgasungszone (E) angeordnet sind, durch die Schmelzepumpe (SP) ersetzt.

Der Abstand zwischen der mindestens einen Entgasungsöffnung (O) und der Schmelzepumpe (SP) wird reduziert, um eine weitere Erwärmung der thermoplastischen Formmasse (F) nach der Entgasung zu reduzieren bzw. vermeiden, und somit die Bildung von Monomeren oder Abbauprodukten durch Depolymerisation zu minimieren. Der Gehalt an Abbauprodukten, beziehungsweise an Restmonomeren, wie monomerem Butadien und/oder monomerem Acrlyat, kann als Maß für eine schonende Verarbeitung der thermoplastischen Formmasse (F) dienen.

Die thermoplastische Formmasse (F) kann von der Schmelzepumpe (SP) einer Schmelzegranulierung, insbesondere einer Unterwassergranulierung, zugeführt werden. Entsprechende Vorrichtungen sind bekannt. Bevorzugt wird die aus einer nach der Schmelzepumpe (SP) angebrachten Lochplatte oder Düsenleiste austretende thermoplastische Formmasse (F) abgekühlt, wobei die thermoplastische Formmasse (F) erstarrt, und gegebenenfalls granuliert wird.

Ferner kann die thermoplastische Formmasse (F) in Förderrichtung nach der Schmelzepumpe (SP) durch mindestens einen Schmelzeilter (SF) gefördert werden. Diese sind dem Fachmann bekannt. Der mindestens eine Schmelzefilter (SF) kann auch als Schmelzesieb ausgeführt sein.

Bevorzugt ist in Förderrichtung nach der Schmelzepumpe (SP) mindestens ein Schmelzefilter angeordnet. Die Schmelzepumpe (SP) ist bevorzugt mit einer Vorrichtung zur Unterwassergranulierung (UW) verbunden.

Bevorzugt umfasst die thermoplastische Komponente (TP) eine Komponente (A), enthaltend ein thermoplastisches Polymer, und eine Komponente (B), enthaltend ein Styrol-Copolymer. Insbesondere besteht die thermoplastische Komponente (TP) aus Komponente (A) und Komponente (B).

Bevorzugt enthält Komponente (A) ein Polymethylmethacrylat (PMMA), ein Polyamid und/oder ein Polycarbonat (PC) oder besteht aus Polymethylmethacrylat (PMMA), Polyamid und/oder Polycarbonat (PC). Komponente (B) enthält (oder ist) oftmals ein Styrol-Acrylnitril-Copolymer (SAN) oder ein α-Methyl-Styrol-Acrylnitril-Copolymer (AMSAN). Komponente (C) enthält oftmals einen butadienhaltigen Kautschuk oder ist ein butadienhaltiger Kautschuk.

Geeignet ist das Verfahren zur Herstellung von Produkten wie z.B. Terluran^{®} (ABS der Ineos Styrolution, Frankfurt) oder Terlux^{®} (MABS der Ineos Styrolution, Frankfurt).

Bevorzugt enthält die thermoplastische Formmasse (F), jeweils bezogen auf die Summe der Komponenten (A), (B) und (C), 25 bis 69 Gew.-% der Komponente (A), 30 bis 69 Gew.-% der Komponente (B), 1 bis 40 Gew.-% der Komponente (C) und ferner 0 bis 20 Gew.-%, oftmals 0,1 bis 10 Gew.-% der Komponente (Z).

Dabei bestehen oftmals Komponente (A) aus einem Polymethylmethacrylat (PMMA), einem Polyamid (PA) und/ oder einem Polycarbonat (PC), die Komponente (B) aus einem Styrol-Acrylnitril-Copolymer (SAN) und/oder einem α-Methyl-Styrol-Acrylnitril-Copolymer (AMSAN) und Komponente (C) aus einem butadienhaltigen Kautschuk und Komponente (Z) aus einem oder mehreren Zusatzstoffen.

Weiter bevorzugt enthält Komponente (A) ein Polymethylmethacrylat (PMMA), ein Polyamid (PA) oder ein Polycarbonat (PC), Komponente (B) ein Styrol-Acrylnitril-Copolymer (SAN) und Komponente (C) einen butadienhaltigen Kautschuk.

Zur Verbesserung der mechanischen Eigenschaften thermoplastischer Formmassen ist der Einsatz von kautschukelastischen Pfropfcopolymeren bekannt, bei denen der Pfropfkern aus vergleichsweise großen agglomerisierten Teilchen besteht, die während der Herstellung der Pfropfkerne durch Zugabe eines Agglomerisations-Polymers erhältlich sind.

Bevorzugt basiert die thermoplastische Formmasse (F) auf harten Methylmethacrylat-Polymeren, harten Vinylaromat-Vinylcyanid-Polymeren und "weichen" Pfopfcopolymeren, die unter weitgehendem Erhalt guter mechanischer Eigenschaften weiter verbesserte optische Eigenschaften, insbesondere eine niedrige Lichtstreuung aufweisen.

Insbesondere bevorzugt enthält die thermoplastische Formmasse (F) eine erste Mischung aus:
Komponente (A)
25 bis 69 Gew.-%, bezogen auf die Summe der Komponenten (A), (B) und (C), eines Methylmethacrylat-Polymers, erhältlich durch Polymerisation einer zweiten Mischung, bestehend aus
(A1) 90 bis 100 Gew.-%, bezogen auf (A), Methylmethacrylat, und
(A2) 0 bis 10 Gew.-%, bezogen auf (A), eines C₁-C₈-Alkylesters der Acrylsäure, und
Komponente (B)
30 bis 69 Gew.-%, bezogen auf die Summe der Komponenten (A), (B) und (C), eines Copolymers, erhältlich durch Polymerisation einer dritten Mischung, aus (B1) 65 bis 88 Gew.-%, bezogen auf (B), eines vinylaromatischen Monomeren und (B2) 12 bis 35 Gew.-%, bezogen auf (B), eines Vinylcyanids, und Komponente (C)
1 bis 40 Gew.-%, oftmals 10 bis 40 Gew.-%, bezogen auf die Summe der Komponenten (A), (B) und (C), eines Pfropfcopolymers, erhältlich aus:
(C1) 40 bis 90 Gew.-%, bezogen auf (C), eines Kerns, erhältlich durch Polymerisation eines ersten Monomerengemisches, bestehend aus (C11) 65 bis 99,9 Gew.-%, bezogen auf (C1), eines 1,3-Diens,
(C12) 0 bis 34,9 Gew.-% bezogen auf (C1), vinylaromatische Monomere,
(C13) 0,1 bis 5 Gew.-%, bezogen auf (C1), eines Agglomerations-Polymers, und
(C2) 5 bis 40 Gew.-%, bezogen auf (C), einer ersten Pfropfhülle, erhältlich durch Polymerisation eines zweiten Monomerengemisches, bestehend aus
(C21) 30 bis 39 Gew.-%, bezogen auf (C2), eines vinylaromatischen Monomeren
(C22) 61 bis 70 Gew.-%, bezogen auf (C2), eines C₁-C₈-Alkylesters der Methacrylsäure und
(C23) 0 bis 3 Gew.-%, bezogen auf (C2), eines vernetzenden Monomeren, und
(C3) 5 bis 40 Gew.-%, bezogen auf (C), einer zweiten Pfropfhülle, erhältlich durch Polymerisation eines dritten Monomerengemisches, bestehend aus (C31) 70 bis 98 Gew.-%, bezogen auf (C3), eines C₁-C₈-Alkylesters der Methacrylsäure und (C32) 2 bis 30 Gew.-%, bezogen auf (C3), eines C₁-C₈-Alkylesters der Acrylsäure, und
gegebenenfalls Komponente (Z), enthaltend Zusatzstoffe, in Mengen von 0 bis 20 Gew.-%, häufig von 0,1 bis 10 Gew.-%, bezogen auf Summe der Komponenten (A), (B) und (C),
mit der Maßgabe, dass weiter bevorzugt das Gewichtsverhältnis von (C2) zu (C3) im Bereich von 2:1 bis 1:2 liegt, wobei
   - der Kern (C1) eine monomodale Teilchengrößenverteilung aufweist,
   - die mittlere Teilchengröße D₅₀ des Kerns (C1) in einem Bereich von 300 bis 400 nm liegt und
   - der Betrag der Differenz aus Brechungsindex (n_{D}-C) der Gesamtkomponente (C) und dem Brechungsindex (n_{D}-AB) einer Gesamtmatrix der Komponenten (A) und (B) weniger als 0,01 beträgt.

Insbesondere besteht die thermoplastische Formmasse (F) aus der ersten Mischung.

In einer bevorzugten Ausführungsform ist die durch das Verfahren herstellbare thermoplastische Formmasse (F) dadurch charakterisiert, dass sie enthält (oder daraus besteht) (jeweils bezogen auf Summe der Komponenten (A), (B) und (C)):
A) 25 bis 69 Gew.-% Polymethylmethacrylat,
B) 30 bis 69 Gew.-% Styrol-Acrylnitril-Copolymer,
C) 10 bis 40 Gew.-% Butadien-Methylmethacrylat- Styrol-Pfropfkautschuk
Z) 0,1 bis 10 Gew.-% Zusatzstoffe.

In einer bevorzugten Ausführungsform ist die thermoplastische Formmasse (F) dadurch charakterisiert, dass der Betrag der Differenz aus Brechungsindex (n_{D}-C) der Gesamtkomponente (C) und dem Brechungsindex (n_{D}-AB) einer Gesamtmatrix der Komponenten (A) und (B) weniger als 0,01 beträgt und insbesondere im Bereich von 0,003 bis 0,008 liegt.

Die Brechungsindices (n_{D}-C) und (n_{D}-AB) können an Folien gemessen werden, die aus den jeweiligen Polymeren (C) oder Polymermischungen aus den Komponenten (A) und (B) in einer IWK-Presse bei 200°C und einem Druck von 3 bis 5 bar 2 min vorgepresst und abschließend bei 200°C und 200 bar 3 min nachgepresst wurden. Die Messungen können bei 20°C mit einem Abbé-Refraktometer nach der Methode zur Messung der Brechungsindizes bei festen Körpern durchgeführt werden (s. Ullmanns Enzyklopädie der technischen Chemie, Band 2/1, S. 486, Herausgeber E. Foerst; München-Berlin 1961). Die Teilchengrößen werden nach gängigen Verfahren bestimmt.

Das bevorzugt verwendete Methylmethacrylat-Polymer ist bevorzugt entweder ein homopolymer aus Methylmethacrylat oder ein Copolymer aus MMA mit bis zu 10 Gew.-%, bezogen auf (A), eines C₁-C₈-Alkylesters der Acrylsäure.

Als C₁-C₈-Alkylester der Acrylsäure (Komponente A2) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, Ethylacrylat, n-Butylacrylat, 2-Ethylhexylacrylat oder Mischungen davon, besonders bevorzugt Methylacrylat. Die Methylmethacrylat-(MMA)-Polymere können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich.

Die Komponente (B) ist bevorzugt ein Copolymer aus einem vinylaromatischen Monomeren (B1) und Vinylcyanid (B2).

Als vinylaromatische Monomere (Komponente B1) kann man Styrol, ein- bis dreifach mit C₁-C₈-Alkylresten substituiertes Styrol wie p-Methylstyrol oder tert.-Butylstyrol sowie α-Methylstyrol, bevorzugt Styrol, einsetzen.

Als Vinylcyanid (Komponente B2) kann man Acrylnitril und/oder Methacrylnitril, bevorzugt Acrylnitril, einsetzen.

Die Copolymere (B) können nach bekannten Verfahren hergestellt werden, wie durch Substanz-, Lösung-, Suspensions- oder Emulsions-Polymerisation, bevorzugt durch Lösungspolymerisation (siehe GB-A 14 72 195).

Als Komponente (C) wird bevorzugt ein Pfropfcopolymer verwendet, aus einem Kern (C1) und zweier darauf aufgebrachter Pfropfhüllen (C2) und (C3).

Der Kern (C1) stellt bevorzugt die Pfropfgrundlage dar. Als 1,3-Dien (Komponente C11) des Kerns des Pfropfcopolymers (Komponente C1) kann man Butadien und/oder Isopren einsetzen.

Als vinylaromatisches Monomer (Komponente C12) kann man Styrol oder vorzugsweise am Kern mit einer, vorzugsweise in α-Stellung, oder auch mehreren C₁-C₈-Alkylgruppe(n), vorzugsweise Methyl, substituiertes Styrol einsetzen.

Als Agglomerisationspolymer (Komponente C13) können bekannte und beispielsweise in WO 01/83574, WO 02/10222 oder DE-A 24 27 960 beschriebene Komponenten eingesetzt werden.

Als Agglomerationspolymere geeignet sind beispielsweise Dispersionen von Acrylesterpolymere, bevorzugt von Copolymeren aus Ethylacrylat und Methacrylamid, in denen der Anteil an Methacrylamid 0,1 bis 20 Gew.-%, bezogen auf das Copolymer, beträgt. Die Konzentration der Acrylesterpolymere in der Dispersion beträgt vorzugsweise 3 bis 40 Gew.-%, besonders bevorzugt 5 bis 20 Gew.-%.

Die Herstellung des Kerns (C1) erfolgt bevorzugt in zwei Stufen nach dem Fachmann bekannten und beispielsweise in Encyclopedia of Polymer Science and Engineering, Vol. 1, S. 401 ff., beschriebenen Verfahren. Üblicherweise stellt man in der ersten Stufe aus den Komponenten (C11) und (C12) nach dem Fachmann bekannten Verfahren, beispielsweise der Emulsionspolymerisation, (siehe Encyclopedia of Polymer Science and Engineering, Vol. 1, S. 401 ff) einen Kern her, der bevorzugt eine Glasübergangstemperatur von kleiner als 0°C aufweist, und dessen mittlere Teilchengröße D₅₀ in der Regel im Bereich von 30 bis 240 nm, bevorzugt im Bereich von 50 bis 180 nm, liegt.

In einer zweiten Stufe erfolgt nach dem Fachmann bekannten beispielsweise in Encyclopedia of Polymer Science and Engineering, Vol. 1, S. 401 ff., beschriebenen Verfahren die Umsetzung des in der ersten Stufe erhaltenen Kerns mit dem Agglomerationspolymer (C13), wobei der Kern (C1) mit einer mittleren Teilchengröße D₅₀ im Bereich von 300 bis 400 nm, bevorzugt von 320 bis 380 nm, besonders bevorzugt von 340 bis 360 nm, erhalten wird. Bevorzugt weist der Kern (C1) eine monomodale Teilchengrö-ßenverteilung auf.

Auf den Kern (C1) wird bevorzugt die Pfropfhülle (C2) aufgebracht, welche die Monomere (C21), (C22) und gegebenenfalls (C23) enthält.

Als vinylaromatisches Monomer (Komponente C21) kann man Styrol oder vorzugsweise am Kern mit einer, vorzugsweise in α-Stehung, oder auch mehreren C₁-C₈-Alkylgruppe(n), vorzugsweise Methyl, substituiertes Styrol einsetzen.

Als C₁-C₈-Alkylester der Methacrylsäure (Komponente C22) verwendet man bevorzugt Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als Monomere (C23) können übliche vernetzend wirkende Monomere eingesetzt werden, also im wesentlichen di -oder polyfunktionelle Co-monomere, insbesondere Alky-lenglykoldi(meth)acrylate wie Ethylen-, Propylen- und Butylenglykoldi(meth)acrylat, Allylmethacrylat, (Meth)acrylate von Glycerin, Trimethylolpropan, Pentaerythrit oder Vinylbenzole wie Di- oder Trivinylbenzol. Bevorzugt wird Butylenglykoldimethacrylat, Butylenglykoldiacrylat und Dihydrodicyclopentadienylacrylat in Form eines Isomerengemischs, besonders bevorzugt Dihydrodicyclopentadienylacrylat in Form eines Isomerengemischs, eingesetzt.

Auf die Pfropfhülle (C2) wiederum wird bevorzugt eine weitere Pfropfhülle (C3) aufgebracht, welche die Monomere (C31) und (C32) aufweist. Die Monomere (C31) sind C₁-C₈-Alkylester der Methacrylsäure, bei den Monomeren (C32) handelt es sich um C₁-C₈-Alkylester der Acrylsäure.

Als C₁-C₈-Alkylester der Methacrylsäure (Monomere C31) verwendet man bevorzugt Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als C₁-C₈-Alkylester der Acrylsäure (Monomere C32) kann man Methylacrylat (MA), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei Methylacrylat besonders bevorzugt ist, sowie Mischungen dieser Monomere untereinander einsetzen.

Die Herstellung der beiden Pfropfhüllen (C2) und (C3) erfolgt bevorzugt in Gegenwart des Kerns (C1) nach literaturbekannten Methoden, insbesondere durch Emulsionspolymerisation (Encyclopedia of Polymer Science and Engineering, Vol. 1, Seite 401 ff.). Durch die dabei angewandte sogenannte Saatfahrweise werden bei der Herstellung der beiden Pfropfhüllen keine neuen Teilchen gebildet. Darüber hinaus ermöglicht es die Saatfahrweise die Zahl und die Art der Teilchen in beiden Pfropfstufen durch die Menge und die Art des eingesetzten Emulgators zu bestimmen. Die Emulsionspolymerisation wird üblicherweise durch Polymerisationsinitiatoren ausgelöst. Bei der Emulsionspolymerisation können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren. Als nichtionogene Emulgatoren sind beispielsweise Fettalkoholpolyglykolether, Alkyl-arylpolyglykolether, Fettsäuremonoethanolamide sowie ethoxylierte Fettsäureamide und -amine geeignet. Bezogen auf das Gesamtgewicht des Emulsionspfropfcopolymerisates liegt die Gesamt-Emulgator-Menge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-II-sulfat verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiator-Menge liegt vorzugsweise zwischen 0,02 und 1,0 Gew.-%, bezogen auf das fertige Emulsionspolymerisat.

Sowohl bei der Herstellung der Grundstufe, d.h. des Kerns (C1), als auch bei der Herstellung der beiden Pfropfstufen, d.h. der beiden Pfropfhüllen (C2) und (C3), können ferner Polymerisationsregler eingesetzt werden. Als Polymerisationsregler dienen u.a. Alkylmercaptane wie beispielsweise n- oder tert.-Dodecylmercaptan. Die Polymerisationsregler werden üblicherweise in einer Menge von 0,01 bis 1,0 Gew.-%, bezogen auf die jeweilige Stufe, eingesetzt.

Im Übrigen wird das Emulsionspfropfcopolymer bevorzugt so hergestellt, dass man eine wässrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95 % polymerisiert. Monomere, Vernetzer, Emulgator, Initiator und Regler können auch komplett oder teilweise als Zulauf der wässrigen Vorlage zugeführt werden. Gegebenenfalls nach einer Nachreaktionszeit von 15 bis 120 Minuten werden die Stufen (C2) und (C3) unter Zulauf der Monomeren in Gegenwart der bereits gebildeten Stufe (C1) durch Emulsionspolymerisation erzeugt.

Aus dem erhaltenen Latex erfolgt bevorzugt auf bekannte Weise durch Ausfällung, Filtration und anschließender Trocknung.

Für die Ausfällung können beispielsweise wässrige Lösungen von anorganischen Salzen wie Natriumchlorid, Natriumsulfat, Magnesiumsulfat und Calciumchlorid, wässrige Lösungen von Salzen der Ameisensäure wie Magnesiumformiat, Calciumformiat und Zinkformiat, wässrige Lösungen von anorganischen Säuren wie Schwefel- und Phosphorsäure sowie wässrige ammoniakalische und aminische Lösungen sowie andere wässrige alkalische Lösungen, z.B. von Natrium- und Kaliumhydroxid verwendet werden. Die Fällung kann aber auch durch physikalische Methoden, beispielsweise Gefrierfällung, Scherfällung, Dampffällung erfolgen. Die Trocknung kann beispielsweise durch Gefrier-, Sprüh-, Wirbelschicht- und Umlufttrocknung erfolgen. Das ausgefällte Emulsionspfropfcopolymerisat kann auch ohne Trocknung weiterverarbeitet werden.

Als übliche Zusatzstoffe (Z) kommen alle solchen Substanzen in Betracht, die sich in den Komponenten (TP) und (C) gut lösen, beziehungsweise mit diesen gut mischbar sind. Geeignete Zusatzstoffe sind u.a. Farbstoffe, Stabilisatoren, Schmiermittel und Antistatika.

Bevorzugt enthält die thermoplastische Formmasse (F) nicht mehr als 5 Gew.-%, insbesondere nicht mehr als 1 Gew.-% Wasser, bezogen auf die Gesamtmasse der thermoplastischen Formmasse (F), wobei der Wassergehalt nach dem Aufschmelzabschnitt (S) und nach dem mindestens einen Mischabschnitt (M) und vor der mindestens einen Entgasungsöffnung (O) bestimmt wird.

Die thermoplastische Formmasse (F) enthält nach Durchführung des erfindungsgemäßen Verfahrens nicht mehr als 3 ppm, insbesondere nicht mehr als 1 ppm, an Restmonomer, insbesondere monomeres Butadien, bezogen auf die Gesamtmasse der thermoplastischen Formmasse (F).

Aus der thermoplastischen Formmasse (F) können hauptsächlich durch Spritzgießen oder durch Formblasen Formteile hergestellt werden. Die thermoplastische Formmasse (F) kann aber auch verpresst, kalandriert, extrudiert oder vakuumgeformt werden. Vergleichsbeispiele und Ausführungsbeispiele der Erfindung sind in den Zeichnungen dargestellt und werden in der nachfolgenden Beschreibung und den Ansprüchen näher erläutert. Es zeigen:
- Figur 1: einen erfindungsgemäßen Extruder mit Schmelzefilter,
- Figur 2: einen erfindungsgemäßen Extruder ohne Schmelzefilter,
- Figur 3: einen erfindungsgemäßen Extruder mit kombinierter Aufschmelz- und Mischzone,
- Figur 4: einen Extruder mit kombinierter Aufschmelz- und Mischzone gemäß dem Stand der Technik und
- Figur 5: eine Ausführungsform eines Extruders ohne weitere Förderelemente (FE) und eine Ausführungsform mit weiteren Förderelementen (FE).

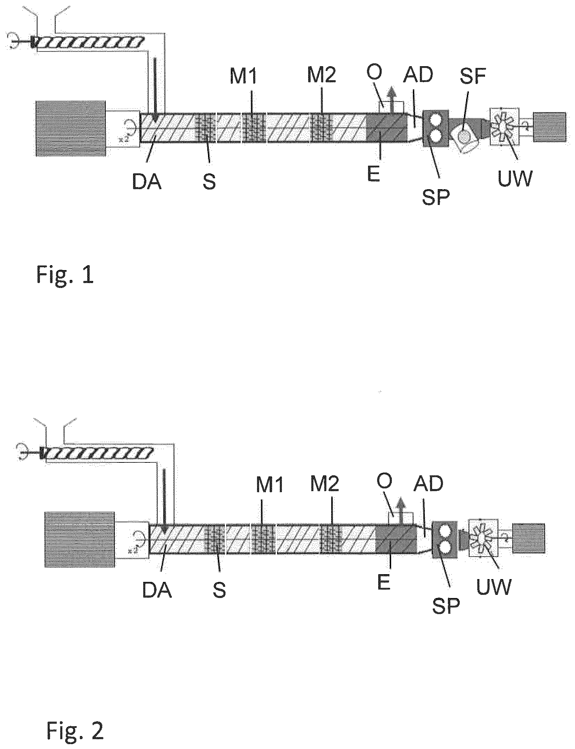

Figur 1 zeigt einen erfindungsgemäßen Extruder umfassend einen Dosierabschnitt (DA), einen Aufschmelzabschnitt (S), einen ersten Mischabschnitt (M1), einen zweiten Mischabschnitt (M2) und eine Entgasungszone (E) mit einer Entgasungsöffnung (O) sowie eine Schmelzepumpe (SP), die ein Adapterstück (AD) aufweist. In Förderrichtung nach der Schmelzepumpe (SP) ist ein Schmelzefilter (SF) angeordnet, gefolgt von einer Vorrichtung zur Unterwassergranulierung (UW).

Figur 2 zeigt einen erfindungsgemäßen Extruder, der im Wesentlichen dem in Figur 1 dargestellten Extruder entspricht, jedoch keinen Schmelzefilter (SF) aufweist.

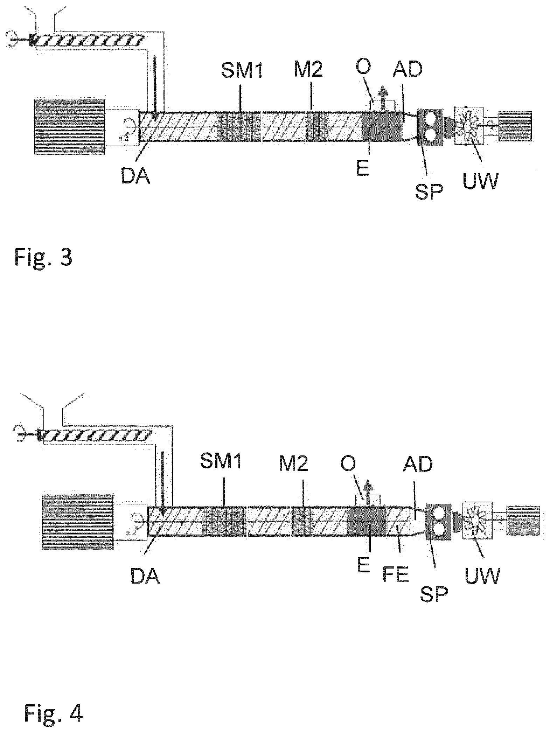

Figur 3 zeigt einen erfindungsgemäßen Extruder, der im Wesentlichen dem in Figur 2 dargestellten Extruder entspricht. Der Aufschmelzabschnitt und ein Mischabschnitt sind hier in einem Abschnitt (SM1) kombiniert.

Figur 4 zeigt einen Extruder gemäß dem Stand der Technik, der im Gegensatz zum in Figur 3 dargestellten Extruder zwischen der Entgasungszone (E) und der Schmelzpumpe (SP) weitere Förderelemente (FE) aufweist, so dass die Länge der Förderstrecke (FS) zwischen der Entgasungsöffnung (O) und der Schmelzepumpe (SP), worunter die Gesamtlänge der Schneckenelemente der Förderstrecke (FS) verstanden wird, mehr als das Fünffache des Außendurchmessers der Schnecke des Extruders beträgt.

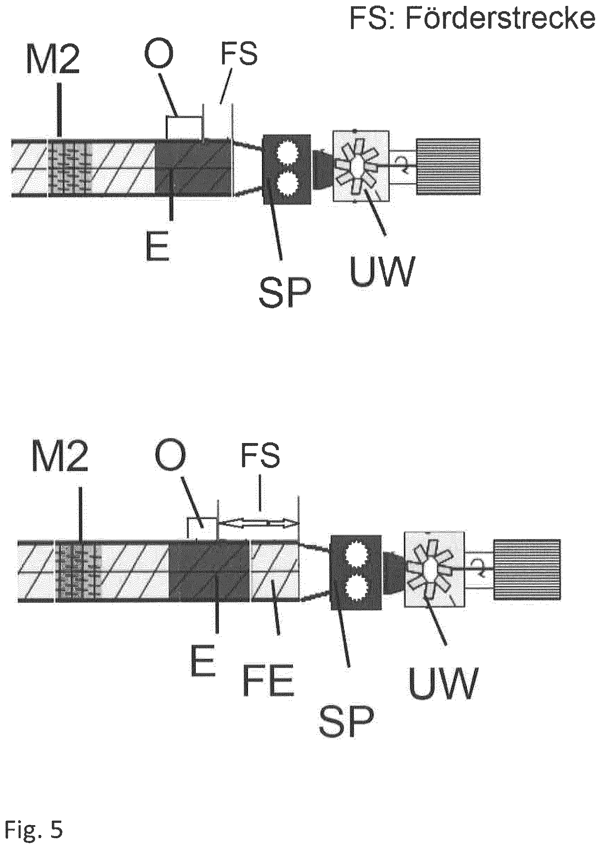

Figur 5 zeigt in der oberen Abbildung einen erfindungsgemäßen Extruder, der im Gegensatz zum in der unteren Abbildung dargestellten Extruder keine weiteren Förderelemente (FE) zwischen der Entgasungszone (E) und der Schmelzpumpe (SP) aufweist. Entsprechend liegt gemäß der oberen Abbildung eine kürze Förderstrecke (FS) vor im Vergleich zur Förderstrecke (FS) gemäß der unteren Abbildung von Figur 5.

### Vergleichsbeispiel 1

In einem Extruder, der zwei gleichsinnig rotierende Schnecken mit einem Außendurchmesser (D) von 65 mm, einen Entgasungsabschnitt, umfassend eine Entgasungsöffung (O), und eine darauf folgende Austragszone aufwies, wurden 500 kg/h thermoplastische Formmasse bei einer Drehzahl von 500 UpM hergestellt.Es handelte sich um einen Extruder analog zur unteren Abbildung von Figur 5, der jedoch keine Schmelzepumpe (SP) besaß.

Die thermoplastische Formmasse (TP) bestand in den Beispielen aus:
A) 28,60 Gew.-% Polymethylmethacrylat, VZ 53 ml/g (0,5 Gew.-% in DMF bei 25°C),
B) 35,10 Gew.-% Styrol-Acrylnitril-Copolymer, VZ 100 ml/g (0,5 Gew.-% in DMF bei 25°C), enthaltend 81 Gew.-% Styrol, 19 Gew.-% Acrylnitril,
C) 36,10 Gew.-%Butadien-Methylmethacrylat- Styrol-Pfropfkautschuk (MBS-Produkt Paraloid 2668 von Dow Chemical), sowie
Z) 0,20 Gew.-% Calciumstearat.

Die Austragszone, in der ein Druck von 60 bar aufgebaut wurde, umfasste Förderelemente. Der Extruder umfasste keine Schmelzepumpe (SP) und die Länge der Förderstrecke FS zwischen der Entgasungsöffung O und der Schmelzepumpe SP betrug 5,25 D.

Die Temperatur der thermoplastischen Formmasse gemessen mit einem handeslsüblichen Einstechthermometer am Granulat-Strang, der aus der auf den Boden geschalteten Anfahrweiche der Unterwassergranulierung austrat, betrug am Ende der Austragszone 295°C. Der Gehalt an Restmonomeren wurde mittels Gaschromatographie bestimmt, wobei zur Herstellung der Probe 1 g der erkalteten hergestelltem thermoplastischen Formmasse in 5 g einer Lösungsmittel-Mischung, hergestellt aus 78,048 g Dimethylsulfoxid, 7,2 mg Mesitylen, 4,32 g Toluol und 0,432 g Propionitril, gegeben und bei 40°C für 24 Stunden geschüttelt wurde. Von dem auf Raumtemperatur abgekühltem Gemisch wurde eine Flüssigprobe in einen Gaschromatographen eingespritzt.

Es wurde in der hergestellten thermoplastischen Formmasse ein Gehalt an Restbutadien von 5,5 ppm, bezogen auf die Gesamtmasse der thermoplastischen Formmasse, ermittelt. Dies ist für einige Anwendungen nicht günstig.

### Vergleichsbeispiel 2

Der in Vergleichsbeispiel 2 eingesetzte Extruder analog Figur 4 unterschied sich vom Extruder gemäß Vergleichsbeispiel 1 dadurch, dass ein Druckaufbau von 10 bar auf 60 bar im Anschluss an die Austragszone mit einer Schmelzepumpe durchgeführt wurde. Die Länge der Förderstrecke (FS) zwischen der Entgasungsöffnung (O) und der Schmelzepumpe (SP) betrug 5,25 D. Die Temperatur der thermoplastischen Formmasse betrug nach der Schmelzepumpe 285°C. Es wurde in der hergestellten thermoplastischen Formmasse ein Gehalt an Restbutadien von 3,5 ppm, bezogen auf die Gesamtmasse der thermoplastischen Formmasse, ermittelt. Dies ist für einige Anwendungen nicht günstig.

### Erfindungsgemäßes Beispiel 3

Der eingesetzte Extruder entsprechend Figur 3 unterschied sich vom Extruder gemäß Vergleichsbeispiel 2 dadurch, dass die Länge der Förderstrecke (FS) zwischen der Entgasungsöffnung (O) und der Schmelzepumpe (SP) nur 1,25 D betrug.

Die Temperatur der thermoplastischen Formmasse betrug nach der Schmelzepumpe 256°C. Es wurde in der hergestellten thermoplastischen Formmasse ein Gehalt an Restbutadien von weniger als 1 ppm, bezogen auf die Gesamtmasse der thermoplastischen Formmasse, ermittelt.

Auch mit anderen Pfropfpolymer enthaltenden Styrol-Copolymer Formmassen, wie den ABS-Zusammensetzungen gemäß WO 2017/093468, konnte der Effekt des niedrigen Restmonomer-Aufbaus mit dem erfindungsgemäßen Verfahren bestätigt werden (z.B. mit Formmassen enthaltend mindestens 60 Gew.-% SAN und mindestens ein Polybutadien-basiertes Pfropfcopolymer).

## Patentansprüche

1. Verfahren zur Herstellung einer thermoplastischen Formmasse (F) in einem Extruder, der mindestens eine Schnecke mit einem Außendurchmesser (D) aufweist, wobei eine thermoplastische Komponente (TP), enthaltend mindestens ein thermoplastisches Polymer, und Komponente (C), enthaltend ein Pfropfpolymer, das auf Butadien und/oder Acrylat basiert,
durch Zuführung von thermischer Energie und/oder mechanischer Energie in einem Aufschmelzabschnitt (S) des Extruders und/oder in mindestens einem Mischabschnitt (M) des Extruders auf eine Temperatur von 200°C bis 280°C erwärmt, aufgeschmolzen und gemischt werden, so dass die thermoplastische Formmasse (F) gebildet wird, und
die thermoplastische Formmasse (F) nachfolgend in einer Entgasungszone (E) des Extruders, die mindestens eine Entgasungsöffnung (O) aufweist, entgast wird, wobei in der Entgasungszone (E) des Extruders ein absoluter Druck (P1) von weniger als 2 bar eingestellt wird, und
die thermoplastische Formmasse (F) nach dem Entgasen mittels Schneckenelementen zu einer Schmelzepumpe (SP) gefördert wird, wobei die Gesamtlänge der Schneckenelemente einer Förderstrecke (FS) von der mindestens einen Entgasungsöffnung (O) zu der Schmelzepumpe (SP) weniger als das vierfache des Außendurchmessers (D) der mindestens einen Schnecke beträgt, wobei die Förderstrecke (FS) die Strecke zwischen dem stromabwärtsseitigen Ende der Entgasungsöffnung (O) und dem Ende des letzten Schneckenelementes ist.

2. Verfahren nach Anspruch 1, **dadurch gekennzeichnet, dass** die thermoplastische Formmasse (F) während der Förderung von der mindestens einen Entgasungsöffnung (O) zu der Schmelzepumpe (SP) einen absoluten Druck (P2) von weniger als 40 bar aufweist.

3. Verfahren nach Anspruch 1 oder 2, **dadurch gekennzeichnet, dass** ein absoluter Druck (P3) der thermoplastischen Formmasse (F) in der Schmelzepumpe (SP) auf mindestens 50 bar erhöht wird

4. Verfahren nach einem der Ansprüche 1 bis 3, **dadurch gekennzeichnet, dass** die thermoplastische Formmasse (F) während der Förderung von der mindestens einen Entgasungsöffnung (O) zu der Schmelzepumpe (SP) eine Temperatur von weniger als 280°C aufweist.

5. Verfahren nach einem der Ansprüche 1 bis 4, **dadurch gekennzeichnet, dass** die thermoplastische Formmasse (F) von der Schmelzepumpe (SP) einer Schmelzegranulierung zugeführt wird.

6. Verfahren nach einem der Ansprüche 1 bis 5, **dadurch gekennzeichnet, dass** die thermoplastische Formmasse (F) in Förderrichtung nach der Schmelzepumpe (SP) durch mindestens einen Schmelzefilter (SF) gefördert wird.

7. Verfahren nach einem der Ansprüche 1 bis 6, **dadurch gekennzeichnet, dass** die thermoplastische Komponente (TP) eine Komponente (A), enthaltend ein thermoplastisches Polymer, und eine Komponente (B), enthaltend ein Styrol-Copolymer, umfasst.

8. Verfahren nach einem der Ansprüche 1 bis 7, **dadurch gekennzeichnet, dass** die thermoplastische Komponente (TP) als Komponente (A) ein Polymethylmethacrylat (PMMA), ein Polyamid und/oder ein Polycarbonat (PC), als Komponente (B) ein Styrol-Acrylnitril-Copolymer (SAN) oder ein alpha-Methyl-Styrol-Acrylnitril-Copolymer (AMSAN) und als Komponente (C) einen Butadien-haltigen Pfropfkautschuk enthält.

9. Verfahren nach einem der Ansprüche 1 bis 8, **dadurch gekennzeichnet, dass** die thermoplastische Formmasse (F) eine erste Mischung enthält aus:
Komponente (A)
25 bis 69 Gew.-%, bezogen auf die Summe der Komponenten (A), (B) und (C), eines Methylmethacrylat-Polymers, erhältlich durch Polymerisation einer zweiten Mischung, bestehend aus
(A1) 90 bis 100 Gew.-%, bezogen auf (A), Methylmethacrylat, und
(A2) 0 bis 10 Gew.-%, bezogen auf (A), eines C₁-C₈-Alkylesters der Acrylsäure, und
Komponente (B)
30 bis 69 Gew.-%, bezogen auf die Summe der Komponenten (A), (B) und (C), eines Copolymers, erhältlich durch Polymerisation einer dritten Mischung, aus
(B1) 65 bis 88 Gew.-%, bezogen auf (B), eines vinylaromatischen Monomeren und
(B2) 12 bis 35 Gew.-%, bezogen auf (B), eines Vinylcyanids, und
Komponente (C)
1 bis 40 Gew.-%, bezogen auf die Summe der Komponenten (A), (B) und (C), eines Pfropfcopolymers, erhältlich aus
(C1) 40 bis 90 Gew.-%, bezogen auf (C), eines Kerns, erhältlich durch Polymerisation eines ersten Monomerengemisches, bestehend aus
(C11) 65 bis 99,9 Gew.-%, bezogen auf (C1), eines 1,3-Diens,
(C12) 0 bis 34,9 Gew.-% bezogen auf (C1), vinylaromatische Monomere,
(C13) 0,1 bis 5 Gew.-%, bezogen auf (C1), eines Agglomerations-Polymers, und
(C2) 5 bis 40 Gew.-%, bezogen auf (C), einer ersten Pfropfhülle, erhältlich durch Polymerisation eines zweiten Monomerengemisches, bestehend aus
(C21) 30 bis 39 Gew.-%, bezogen auf (C2), eines vinylaromatischen Monomeren,
(C22) 61 bis 70 Gew.-%, bezogen auf (C2), eines C₁-C₈-Alkylesters der Methacrylsäure und
(C23) 0 bis 3 Gew.-%, bezogen auf (C2), eines vernetzenden Monomeren, und
(C3) 5 bis 40 Gew.-%, bezogen auf (C), einer zweiten Pfropfhülle, erhältlich durch Polymerisation eines dritten Monomerengemisches, bestehend aus
(C31) 70 bis 98 Gew.-%, bezogen auf (C3), eines C₁-C₈-Alkylesters der Methacrylsäure und
(C32) 2 bis 30 Gew.-%, bezogen auf (C3), eines C₁-C₈-Alkylesters der Acrylsäure, und
Komponente (Z), enthaltend Zusatzstoffe, in Mengen von 0 bis 20 Gew.-%, bezogen auf die Summe der Komponenten (A), (B) und (C),
mit der Maßgabe, dass das Gewichtsverhältnis von (C2) zu (C3) im Bereich von 2:1 bis 1:2 liegt, wobei
- der Kern (C1) eine monomodale Teilchengrößenverteilung aufweist,
- die mittlere Teilchengröße D₅₀ des Kerns (C1) in einem Bereich von 300 bis 400 nm liegt und
- der Betrag der Differenz aus Brechungsindex (n_{D}-C) der Gesamtkomponente (C) und dem Brechungsindex (n_{D}-AB) einer Gesamtmatrix der Komponenten (A) und (B) weniger als 0,01 beträgt.

10. Verfahren nach einem der Ansprüche 1 bis 9, **dadurch gekennzeichnet, dass** die thermoplastische Formmasse (F) nicht mehr als 5 Gew.-% Wasser enthält, bezogen auf die Gesamtmasse der thermoplastischen Formmasse (F).

11. Thermoplastische Formmasse (F) hergestellt nach einem Verfahren gemäß einem der Ansprüche 1 bis 10, **dadurch gekennzeichnet, dass** die thermoplastische Formmasse (F) nach Durchführung des Verfahrens nicht mehr als 3 ppm monomeres Butadien enthält, bezogen auf die Gesamtmasse der thermoplastischen Formmasse (F).

12. Thermoplastische Formmasse (F) nach Anspruch 11, **dadurch gekennzeichnet, dass** die thermoplastische Formmasse (F) nach Durchführung des Verfahrens nicht mehr als 1 ppm monomeres Butadien enthält, bezogen auf die Gesamtmasse der thermoplastischen Formmasse (F).

13. Vorrichtung zur Durchführung eines Verfahren nach einem der Ansprüche 1 bis 10, umfassend:
einen Extruder, der mindestens eine Schnecke mit einem Außendurchmesser (D), einen Dosierabschnitt (DA), mindestens einen Mischabschnitt (M) und mindestens eine Entgasungszone (E) aufweist und eine Schmelzepumpe (SP) mit einer Eintrittsöffnung umfasst,
wobei die Entgasungszone (E) mindestens eine Entgasungsöffnung (O) aufweist, **dadurch gekennzeichnet, dass** die Entgasungszone (E) und die Schmelzepumpe (SP) so angeordnet sind, dass die Gesamtlänge der Schneckenelemente einer Förderstrecke (FS) zwischen der mindestens einen Entgasungsöffnung (O) der Entgasungszone (E) und der Eintrittsöffnung der Schmelzepumpe (SP) weniger als das vierfache des Außendurchmessers (D) der Schnecke beträgt, wobei die Förderstrecke (FS) die Strecke zwischen dem stromabwärtsseitigen Ende der Entgasungsöffnung (O) und dem Ende des letzten Schneckenelementes ist.

14. Vorrichtung nach Anspruch 13, **dadurch gekennzeichnet, dass** in Förderrichtung nach der Schmelzepumpe (SP) mindestens ein Schmelzefilter (F) angeordnet ist und/oder die Schmelzepumpe (SP) mit einer Vorrichtung zur Unterwassergranulierung (UW) verbunden ist.

15. Vorrichtung nach Anspruch 13 oder 14, **dadurch gekennzeichnet, dass** der Extruder zwei gleichsinnig rotierende Schnecken aufweist.

16. Vorrichtung nach einem der Ansprüche 13 bis 15, **dadurch gekennzeichnet, dass** der mindestens eine Aufschmelzabschnitt (S) und ein Mischabschnitt (M) in einem Abschnitt des Extruders kombiniert sind.

## Claims

1. Process for the production of a thermoplastic moulding composition (F) in an extruder, which has at least one screw with an external diameter (D), where a thermoplastic component (TP), comprising at least one thermoplastic polymer, and component (C), comprising a graft polymer based on butadiene and/or on acrylate,
are heated by introduction of thermal energy and/or mechanical energy in a melting section (S) of the extruder and/or in at least one mixing section (M) of the extruder to a temperature of 200°C to 280°C, melted and mixed, thus forming the thermoplastic moulding composition (F), and
the thermoplastic moulding composition (F) is then devolatilized in a devolatilization zone (E) of the extruder, said zone having at least one devolatilization aperture (0), where an absolute pressure (P1) below 2 bar is established in the devolatilization zone (E) of the extruder, and
after the devolatilization, the thermoplastic moulding composition (F) is conveyed by means of screw elements to a melt pump (SP), where the total length of the screw elements of a region of conveying (FS) from the at least one devolatilization aperture (0) to the melt pump (SP) is less than four times the external diameter (D) of the at least one screw, where the region of conveying (FS) is the region between the downstream end of the devolatilization aperture (0) and the end of the final screw element.

2. Process according to Claim 1, **characterized in that** the absolute pressure (P2) of the thermoplastic moulding composition (F) during conveying from the at least one devolatilization aperture (0) to the melt pump (SP) is below 40 bar.

3. Process according to Claim 1 or 2, **characterized in that** the absolute pressure (P3) of the thermoplastic moulding composition (F) is increased in the melt pump (SP) to at least 50 bar.

4. Process according to any of Claims 1 to 3, **characterized in that** the temperature of the thermoplastic moulding composition (F) during conveying from the at least one devolatilization aperture (O) to the melt pump (SP) is below 280°C.

5. Process according to any of Claims 1 to 4, **characterized in that** the thermoplastic moulding composition (F) is introduced, from the melt pump (SP), into a melt-pelletization procedure.

6. Process according to any of Claims 1 to 5, **characterized in that** the thermoplastic moulding composition (F) is conveyed via at least one melt filter (SF) after the melt pump (SP) in conveying direction.

7. Process according to any of Claims 1 to 6, **characterized in that** the thermoplastic component (TP) comprises a component (A), comprising a thermoplastic polymer, and a component (B), comprising a styrene copolymer.

8. Process according to any of Claims 1 to 7, **characterized in that** the thermoplastic component (TP) comprises, as component (A), a polymethyl methacrylate (PMMA), a polyamide and/or a polycarbonate (PC), and comprises, as component (B), a styrene-acrylonitrile copolymer (SAN) or an alphamethyl-styrene-acrylonitrile copolymer (AMSAN), and comprises, as component (C), a butadiene-containing graft rubber.

9. Process according to any of Claims 1 to 8, **characterized in that** the thermoplastic moulding composition (F) comprises a first mixture of:
component (A)
25 to 69% by weight, based on the entirety of components (A), (B) and (C), of a methyl methacrylate polymer obtainable by polymerization of a second mixture consisting of
(A1) 90 to 100% by weight, based on (A), of methyl methacrylate, and
(A2) 0 to 10% by weight, based on (A), of a C₁-C₈-alkyl ester of acrylic acid,
and
component (B)
30 to 69% by weight, based on the entirety of components (A), (B) and (C), of a copolymer obtainable by polymerization of a third mixture of (B1) 65 to 88% by weight, based on (B), of a vinylaromatic monomer
and
(B2) 12 to 35% by weight, based on (B), of a vinyl cyanide, and
component (C)
1 to 40% by weight, based on the entirety of components (A), (B) and (C), of a graft copolymer obtainable from
(C1) 40 to 90% by weight, based on (C), of a core obtainable by
polymerization of a first monomer mixture consisting of
(C11) 65 to 99.9% by weight, based on (C1), of a 1,3-diene,
(C12) 0 to 34.9% by weight, based on (C1), of vinylaromatic monomers,
(C13) 0.1 to 5% by weight, based on (C1), of an agglomeration polymer, and
(C2) 5 to 40% by weight, based on (C), of a first graft shell obtainable by polymerization of a second monomer mixture consisting of
(C21) 30 to 39% by weight, based on (C2), of a vinylaromatic monomer,
(C22) 61 to 70% by weight, based on (C2), of a C₁-C₈-alkyl ester of methacrylic acid and
(C23) 0 to 3% by weight, based on (C2), of a crosslinking monomer, and
(C3) 5 to 40% by weight, based on (C), of a second graft shell obtainable by polymerization of a third monomer mixture consisting of
(C31) 70 to 98% by weight, based on (C3), of a C₁-C₈-alkyl ester of methacrylic acid and
(C32) 2 to 30% by weight, based on (C3), of a C₁-C₈-alkyl ester of acrylic acid, and
component (Z), comprising additives, in quantities of 0 to 20% by weight, based on the entirety of components (A), (B) and (C),
with the proviso that the ratio by weight of (C2) to (C3) is in the range of 2:1 to 1:2, where
- the core (C1) has a monomodal particle size distribution,
- the median particle size D₅₀ of the core (C1) is in the range of 300 to 400 nm and
- the absolute value of the difference calculated from refractive index (n_{D}-C) of the entire component (C) and the refractive index (n_{D}-AB) of an entire matrix of components (A) and (B) is below 0.01.

10. Process according to any of Claims 1 to 9, **characterized in that** the thermoplastic moulding composition (F) comprises no more than 5% by weight of water, based on the entire composition of the thermoplastic moulding composition (F).

11. Thermoplastic moulding composition (F) produced by a process according to any of Claims 1 to 10, **characterized in that** the thermoplastic moulding composition (F) comprises, after conduct of the process, no more than 3 ppm of monomeric butadiene, based on the entire composition of the thermoplastic moulding composition (F).

12. Thermoplastic moulding composition (F) according to Claim 11, **characterized in that** the thermoplastic moulding composition (F) comprises, after conduct of the process, no more than 1 ppm of monomeric butadiene, based on the entire composition of the thermoplastic moulding composition (F).

13. Device for the conduct of a process according to any of Claims 1 to 10, comprising:
an extruder, which has at least one screw with an external diameter (D), one addition section (DA), at least one mixing section (M) and at least one devolatilization zone (E) and one melt pump (SP) with an entry aperture,
where the devolatilization zone (E) has at least one devolatilization aperture (O), **characterized in that** the arrangement of the devolatilization zone (E) and the melt pump (SP) is such that the total length of the screw elements of a region of conveying (FS) between the at least one devolatilization aperture (O) of the devolatilization zone (E) and the entry aperture of the melt pump (SP) is less than four times the external diameter (D) of the screw, where the region of conveying (FS) is the region between the downstream end of the devolatilization aperture (O) and the end of the final screw element.

14. Device according to Claim 13, **characterized in that** there is at least one melt filter (F) arranged after the melt pump (SP) in conveying direction and/or the melt pump (SP) has connection to a device for the underwater pelletization procedure (UW).

15. Device according to Claim 13 or 14, **characterized in that** the extruder has two screws rotating in the same direction.

16. Device according to any of Claims 13 to 15, **characterized in that** the at least one melting section (S) and one mixing section (M) are combined in a section of the extruder.

## Revendications

1. Procédé pour la préparation d'une masse de moulage thermoplastique (F) dans une extrudeuse qui présente au moins une vis sans fin présentant un diamètre externe (D), un composant thermoplastique (TP), contenant au moins un polymère thermoplastique, et composant (C), contenant un polymère greffé qui est à base de butadiène et/ou d'acrylate,
étant chauffé à une température de 200°C à 280°C, fondu et mélangé par apport d'énergie thermique et/ou d'énergie mécanique dans une section de fusion (S) de l'extrudeuse et/ou dans au moins une section de mélange (M) de l'extrudeuse, de telle sorte que la masse de moulage thermoplastique (F) est formée et
la masse de moulage thermoplastique (F) étant ensuite dégazée dans une zone de dégazage (E) de l'extrudeuse, qui présente au moins une ouverture de dégazage (O), une pression absolue (P1) inférieure à 2 bars étant réglée dans la zone de dégazage (E) de l'extrudeuse et
la masse de moulage thermoplastique (F) étant transportée, après le dégazage, au moyen d'éléments de vis sans fin, vers une pompe à masse fondue (SP), la longueur totale des éléments de vis sans fin d'une zone de transport (FS) à partir de ladite au moins une ouverture de dégazage (O) jusqu'à la pompe à masse fondue (SP) étant inférieure au quadruple du diamètre externe (D) de ladite au moins une vis sans fin, la zone de transport (FS) étant la zone entre l'extrémité située sur le côté en aval de l'ouverture de dégazage (O) et l'extrémité du dernier élément de vis sans fin.

2. Procédé selon la revendication 1, **caractérisé en ce que** la masse de moulage thermoplastique (F) présente, pendant le transport à partir de ladite au moins une ouverture de dégazage (O) jusqu'à la pompe à masse fondue (SP), une pression absolue (P2) inférieure à 40 bars.

3. Procédé selon la revendication 1 ou 2, **caractérisé en ce qu'**une pression absolue (P3) de la masse thermoplastique (F) dans la pompe à masse fondue (SP) est augmentée à au moins 50 bars.

4. Procédé selon l'une quelconque des revendications 1 à 3, **caractérisé en ce que** la masse de moulage thermoplastique (F) présente, pendant le transport à partir de ladite au moins une ouverture de dégazage (O) jusqu'à la pompe à masse fondue (SP), une température inférieure à 280°C.

5. Procédé selon l'une quelconque des revendications 1 à 4, **caractérisé en ce que** la masse de moulage thermoplastique (F) est introduite par la pompe à masse fondue (SP) dans une granulation de masse fondue.

6. Procédé selon l'une quelconque des revendications 1 à 5, **caractérisé en ce que** la masse de moulage thermoplastique (F) est transportée, dans le sens de transport, après la pompe à masse fondue (SP), à travers au moins un filtre à masse fondue (SF).

7. Procédé selon l'une quelconque des revendications 1 à 6, **caractérisé en ce que** le composant thermoplastique (TP) comprend un composant (A), contenant un polymère thermoplastique, et un composant (B), contenant un copolymère de styrène.

8. Procédé selon l'une quelconque des revendications 1 à 7, **caractérisé en ce que** le composant thermoplastique (TP) contient, comme composant (A), un poly(méthacrylate de méthyle) (PMMA), un polyamide et/ou un polycarbonate (PC), comme composant (B), un copolymère de styrène-acrylonitrile (SAN) ou un copolymère d'alpha-méthyl-styrène-acrylonitrile (AMSAN) et, comme composant (C), un caoutchouc greffé contenant du butadiène.

9. Procédé selon l'une quelconque des revendications 1 à 8, **caractérisé en ce que** la masse de moulage thermoplastique (F) contient un mélange constitué par :
composant (A)
25 à 69% en poids, par rapport à la somme des composants (A), (B) et (C), d'un polymère de méthacrylate de méthyle, pouvant être obtenu par polymérisation d'un deuxième mélange constitué par
(A1) 90 à 100% en poids, par rapport à (A), de méthacrylate de méthyle et
(A2) 0 à 10% en poids, par rapport à (A), d'un ester C₁-C₈-alkylique de l'acide acrylique et
composant (B)
30 à 69% en poids, par rapport à la somme des composants (A), (B) et (C), d'un copolymère, pouvant être obtenu par polymérisation d'un troisième mélange constitué par
(B1) 65 à 88% en poids, par rapport à (B), d'au moins un monomère aromatique de vinyle et
(B2) 12 à 35% en poids, par rapport à (B), d'un cyanure de vinyle et
composant (C)
1 à 40% en poids, par rapport à la somme des composants (A), (B) et (C), d'un copolymère greffé, pouvant être obtenu à partir de
(C1) 40 à 90% en poids, par rapport à (C), d'un coeur pouvant être obtenu par polymérisation d'un premier mélange de monomères, constitué par
(C11) 65 à 99,9% en poids, par rapport à (C1), d'un 1,3-diène,
(C12) 0 à 34,9% en poids, par rapport à (C1), de monomères aromatiques de vinyle,
(C13) 0,1 à 5% en poids, par rapport à (C1), d'un polymère d'agglomération et
(C2) 5 à 40% en poids, par rapport à (C), d'une première enveloppe de greffage, pouvant être obtenue par polymérisation d'un deuxième mélange de monomères, constitué par
(C21) 30 à 39% en poids, par rapport à (C2), d'un monomère aromatique de vinyle,
(C22) 61 à 70% en poids, par rapport à (C2), d'un ester C₁-C₈-alkylique de l'acide méthacrylique et
(C23) 0 à 3% en poids, par rapport à (C2), d'un monomère de réticulation, et
(C3) 5 à 40% en poids, par rapport à (C), d'une deuxième enveloppe de greffage, pouvant être obtenue par polymérisation d'un troisième mélange de monomères, constitué par
(C31) 70 à 98% en poids, par rapport à (C3), d'un ester C₁-C₈-alkylique de l'acide méthacrylique et
(C32) 2 à 30% en poids, par rapport à (C3), d'un ester C₁-C₈-alkylique de l'acide acrylique et
composant (Z), contenant des additifs, en des quantités de 0 à 20% en poids, par rapport à la somme des composants (A), (B) et (C),
sous réserve que le rapport pondéral de (C2) à (C3) se situe dans la plage de 2:1 à 1:2, dans lequel
- le coeur (C1) présentant une distribution granulométrique monomodale,
- la grosseur moyenne de particule D₅₀ du coeur (C1) étant située dans une plage de 300 à 400 nm et
- la valeur de la différence de l'indice de réfraction (n_{D}-C) du composant total (C) et de l'indice de réfraction (n_{D}-AB) d'une matrice totale des composants (A) et (B) étant inférieure à 0,01.

10. Procédé selon l'une quelconque des revendications 1 à 9, **caractérisé en ce que** la masse de moulage thermoplastique (F) ne contient pas plus de 5% en poids d'eau, par rapport à la masse totale de la masse de moulage thermoplastique (F).

11. Masse de moulage thermoplastique (F) préparée selon un procédé selon l'une quelconque des revendications 1 à 10, **caractérisée en ce que** la masse de moulage thermoplastique (F), après la réalisation du procédé, ne contient pas plus de 3 ppm de butadiène monomère, par rapport à la masse totale de la masse de moulage thermoplastique (F).

12. Masse de moulage thermoplastique (F) selon la revendication 11, **caractérisée en ce que** la masse de moulage thermoplastique (F), après la réalisation du procédé, ne contient pas plus de 1 ppm de butadiène monomère, par rapport à la masse totale de la masse de moulage thermoplastique (F).

13. Dispositif pour la réalisation d'un procédé selon l'une quelconque des revendications 1 à 10, comprenant :
une extrudeuse, qui présente au moins une vis sans fin présentant un diamètre externe (D), une section de dosage (DA), au moins une section de mélange (M) et au moins une zone de dégazage (E) et une pompe à masse fondue (SP) pourvue d'une ouverture d'entrée,
la zone de dégazage (E) présentant au moins une ouverture de dégazage (O),
**caractérisé en ce que** la zone de dégazage (E) et la pompe à masse fondue (SP) sont agencées de manière telle que la longueur totale des éléments de vis sans fin d'une zone de transport (FS) entre ladite au moins une ouverture de dégazage (O) de la zone de dégazage (E) et l'ouverture d'entrée de la pompe à masse fondue (SP) est inférieure au quadruple du diamètre externe (D) de la vis sans fin, la zone de transport (FS) étant la zone entre l'extrémité située sur le côté en aval de l'ouverture de dégazage (O) et l'extrémité du dernier élément de vis sans fin.

14. Dispositif selon la revendication 13, **caractérisé en ce qu'**au moins un filtre à masse fondue (F) est agencé dans le sens de transport après la pompe à masse fondue (SP) et/ou la pompe à masse fondue (SP) est reliée à un dispositif pour la granulation sous eau (UW).

15. Dispositif selon la revendication 13 ou 14, **caractérisé en ce que** l'extrudeuse présente deux vis sans fin tournant dans le même sens.

16. Dispositif selon l'une quelconque des revendications 13 à 15, **caractérisé en ce que** ladite au moins une section de fusion (S) et une section de mélange (M) sont combinées dans une section de l'extrudeuse.
